# EUROPEAN PATENT APPLICATION

(11) **EP 4 427 840 A1**
(43) Date of publication of application: **11.09.2024**
(21) Application number: 23217866.5
(22) Date of filing: 19.12.2023
(51) Int. Cl.: B01J 35/33, B01J 37/12, B01J 37/03, B01J 23/46, B01J 35/61, B01J 37/00, B01J 37/06, B01J 37/08, C25B 1/04, C25B 11/054, C25B 11/067, C25B 11/069, C25B 11/081, H01M 4/90, H01M 4/92, B01J 37/04

(54) **SUPPORTED NOBLE METAL CATALYST, ITS PREPARATION METHOD VIA PEROXIDE MELTING AND ITS USE IN ELECTROLYSIS DEVICE OR FUEL CELL**

(30) Priority: 13.01.2023 CN 202310039752
(71) Applicant: Heraeus Precious Metal Technology (China) Co., Ltd., Nanjing, Jiangsu 210047 (CN)
(72) Inventor: Dong, Weiwen, SHANGHAI, 201108 (CN); Zhang, Bin, NANJING, 210047 (CN); Zheng, Zhiyang, SHANGHAI, 201108 (CN)
(74) Representative: Heraeus IP

(57) **Abstract**

The present invention relates to a method for preparing a supported noble metal catalyst, comprising the following steps: i) melting a noble metal sponge, a peroxide, and a support and/or a support precursor together; ii) dispersing the molten mixture in water; and iii) adjusting the pH to 4 to 10, thereby obtaining a supported noble metal catalyst. The method of the present invention uses a noble metal sponge rather than an intermediate noble metal precursor, such as a noble metal nitrate salt, a noble metal halide salt, a halogenated noble metal acid, or a salt of the halogenated noble metal acid, for example, H₃IrCl₆, H₂IrCl₆, or IrCl₃. The method does not produce any intermediate product, and does not use any chlorine-containing material, thereby avoiding contamination of the final catalyst by chlorine. The method is time-saving and is simple to operate. The catalyst produced by the present invention has high activity, and the RDE OER overpotential is less than 230 mV (at 10 mA cm⁻²). Furthermore, the catalyst has a high surface area.

## Description

### TECHNICAL FIELD

The present invention relates to a supported noble metal catalyst, a preparation method therefor and a use thereof, and particularly to a supported platinum group metal catalyst, a preparation method therefor and a use thereof.

### BACKGROUND

Hydrogen is one of the most promising renewable energy sources for the future. Water electrolysis is the main approach for producing green hydrogen. Two different types of water electrolysis devices are typically used in the prior art: alkaline electrolysis devices and proton exchange membrane (PEM) water electrolysis devices. In comparison with conventional alkaline electrolysis devices, water electrolysis devices that use a proton exchange membrane and a noble metal oxide catalyst can operate at a fairly high current density and a significantly low specific energy consumption and have the advantages of high device utilization rates and low production costs.

PEM water electrolysis devices typically use a noble metal and/or an oxide thereof due to the excellent corrosion resistance and unique electrochemical performance thereof, preferably a platinum group metal and/or an oxide thereof, and particularly iridium, ruthenium, or platinum and/or an oxide thereof.

CN 113046784 B discloses an IrO₂-TiO₂ solid solution material rich in oxygen defects and a preparation method therefor. The preparation method comprises: dissolving an Ir-containing metal salt in an organic solvent, adding an activated Ti-based metal organic framework material, mixing homogeneously to obtain a Ti-based metal organic framework material on which Ir is adsorbed, and then performing annealing treatment to obtain an IrO₂-TiO₂ solid solution material rich in oxygen defect.

CN 114540865 A discloses a preparation method for an iridium oxide catalyst for hydrogen production through water electrolysis. The method employs a fast microwave assisted preparation technique to prepare ultrafine iridium particles. A scheme of compounding citric acid, ethylene glycol, and glycerol as a solvent is adopted to prepare an iridium black particle precursor. Then, the ultrafine iridium black particle precursor is effectively supported on a support, and afterwards, thermal oxidation is performed.

CN 114606510 A discloses a laminar iridium-based perovskite nanosheet catalyst and a preparation method therefor. The method comprises: mixing SrCO₃ with Ir powder, calcining the obtained mixture to obtain laminar iridium-based perovskite, mixing the obtained laminar iridium-based perovskite with a protonic acid solution, and mixing the resulting protonated laminar iridium-based perovskite with an aqueous organic ammonia solution, such that organic ammonia molecules are intercalated between layers of the laminar iridium-based perovskite.

CN 114540836 B discloses a preparation method for an iridium-based multi-complexed nanoporous catalyst, comprising the following steps: assembling iridium nanoparticles with an oxide by a microemulsion method to synthesize an iridium-based multi-complexed nanoporous catalyst, wherein the iridium nanoparticles are prepared by a solvent thermal reduction method.

On the other hand, noble metals and/or oxides thereof, preferably platinum group metals and/or oxides thereof, and particularly iridium, ruthenium, or platinum and/or oxides thereof are also widely used in fuel cells, especially hydrogen fuel cells, so as to slow the corrosion of a carbon support in a platinum carbon catalyst during reversal.

For example, CN 111029599 B discloses a preparation method for an anti-reversal catalyst, comprising: adding a reducing agent to an iridium precursor solution and dispersing homogeneously, adjusting the pH to 11 to 13, and then adding a niobium-doped titanium dioxide support and stirring homogeneously to obtain a reaction system; heating and refluxing the reaction system at 100°C to 140°C for 4 h to 8 h, and adjusting the pH to 2 to 4 to obtain an initial product; filtering, washing, and drying the initial product to obtain an iridium oxide-complexed niobium-doped titanium dioxide nano catalyst.

CN 112838226 A discloses an anti-reversal catalyst, the catalyst comprising Ti₄O₇ as a support and an iridium oxide coated on the surface of Ti₄O₇, wherein the catalyst has a core-shell structure. In addition, the patent application further discloses a preparation method for the anti-reversal catalyst, comprising: performing a hydrolysis reaction using titanium dioxide particles, a cationic surfactant, ethyl silicate, and a solvent to form SiO₂@TiO₂; treating the obtained SiO₂@TiO₂ in a reducing gas to form Ti₄O₇, then treating the same with HF to remove SiO₂ to form monodispersed nano Ti₄O₇; reacting the monodispersed nano Ti₄O₇, an iridium precursor, a reducing agent, an alkaline reagent, and a solvent at 130°C to 150°C for 3 h to 5 h, neutralizing with an acid, and washing and filtering to obtain IrO₂@Ti₄O₇.

The prior art mostly employs an impregnation method to adsorb a noble metal precursor, mainly an iridium compound and/or a ruthenium compound, onto the surface of or into the micropores of particles of a support. This method mainly has the following disadvantages:
1. The noble metal precursor is typically a noble metal chloride. It is difficult to remove chlorine ions after the chlorine ions enter the micropores of the catalyst support, and the presence of the chlorine ions would adversely affect the catalyst. Moreover, during the production process of the noble metal compound, some other metal and or nonmetal element ions that would adversely affect the supported catalyst may also be incorporated.
2. Since impregnation methods use a noble metal precursor, the overall production process requires more steps, and thus more wastes are generated, resulting in high product costs. These issues will incur more costs to the supported catalyst.
3. Supported noble metal catalysts produced by impregnation methods may suffer from a decrease in catalyst performance due to separation and loss of noble metal microparticles during use of the catalyst, because the noble metal microparticles and/or noble metal oxide microparticles are not bound strong enough.

### SUMMARY OF THE INVENTION

An objective of the present invention is to provide a supported noble metal catalyst, a preparation method therefor and a use thereof. The noble metal catalyst has a low overpotential in the oxygen evolution reaction determined by a rotating disk electrode method (RDE OER) and a high surface area. The preparation method for the catalyst uses a noble metal sponge rather than an intermediate noble metal precursor, such as a noble metal nitrate salt, a noble metal halide salt, a halogenated noble metal acid, or a salt of the halogenated noble metal acid, for example, H₃IrCl₆, H₂IrCl₆, or IrCl₃. The method does not produce any intermediate product, and does not use any chlorine-containing material, thereby avoiding contamination of the final catalyst by chlorine. The method is time-saving and is simple to operate. The catalyst produced has high activity, and the RDE OER overpotential is less than 230 mV (at 10 mA cm⁻²). Besides, the catalyst produced has a high surface area, for example higher than 100 m²/g, preferably from 105 m²/g to 500 m²/g, as measured by means of nitrogen adsorption according to a BET method.

In one aspect of the present invention, the present invention relates to a supported noble metal catalyst comprising a support and a noble metal supported on the support, wherein the content of the noble metal is from 10 wt% to 65 wt%, preferably from 35 wt% to 65 wt%, based on the total weight of the supported noble metal catalyst, and the catalyst has an RDE OER overpotential of below 230 mV at 10 mA cm⁻².

In one embodiment of the present invention, the noble metal may be a platinum group metal, preferably Ru, Rh, Pd, Pt, Os, or Ir, more preferably Ru, Pt, or Ir, and most preferably Ir.

In the supported noble metal catalyst of the present invention, the noble metal may be present in the metal state and/or an oxide thereof, preferably in a mixed form of the noble metal and an oxide thereof. The metal state is to be understood as the 0 oxidation state. Preferably, the supported noble metal catalyst of the present invention may comprise active particles of the noble metal and of the oxide of the noble metal. The content of the noble metal in the supported noble metal catalyst of the present invention may range from 10 wt% to 65 wt%, preferably from 35 wt% to 65 wt%, based on the total weight of the supported noble metal catalyst, wherein the content of the noble metal is the sum of both the noble metal in the metal state, and optionally the noble metal in the oxide state, and in the case of the oxide of the noble metal, the content is calculated as the noble metal share of the oxide. The content of the support in the supported noble metal catalyst of the present invention may range from 35 wt% to 90 wt%, preferably from 35 wt% to 65 wt%, based on the total weight of the supported noble metal catalyst.

The supported noble metal catalyst of the present invention may have a surface area higher than 100 m²/g, preferably from 105 m²/g to 500 m²/g, as measured by means of nitrogen adsorption according to a BET method.

In the supported noble metal catalyst of the present invention, the support may be an oxide of Si, Ti, Al, Sn, Ta, Mg, or a rare earth metal, and/or a mixture of the oxides, preferably an oxide of Ti, Si, or Al, and/or a mixture of the oxides.

In another aspect of the present invention, the present invention relates to a preparation method for a supported noble metal catalyst, comprising the following steps:
i) melting a noble metal sponge, a peroxide, and a support and/or a support precursor together;
ii) dispersing the molten mixture in water; and
iii) adjusting the pH to 4 to 10, thereby obtaining a supported noble metal catalyst.

In step i) of the method of the present invention, the noble metal raw material used is a noble metal sponge, for example an Ir sponge. It was surprisingly found that when a noble metal sponge is used, the catalyst produced has high activity and a high specific surface area, which is particularly advantageous for both water electrolysis and a hydrogen fuel cell.

Noble metal sponges are commercially available (for example from Heraeus), or can be prepared by methods known in the art. For example, noble metal salts obtainable in metallurgical processes, e.g., (NH₄)₂PtCl₆, (NH₄)₂IrCl₆, Pd(NH₃)₂Cl₂, or (NH₄)₃RhCl₆ can be calcined, thereby obtaining platinum sponge, iridium sponge, palladium sponge, or rhodium sponge, respectively.

The noble metal sponge used in the present invention may have a D50 particle size of 2 mm or below, preferably 0.2 mm or below. The particle size of the noble metal sponge can be determined by sieving.

In step i) of the method of the present invention, the peroxide used may be an inorganic peroxide, preferably an alkali metal peroxide or an alkaline earth metal peroxide, more preferably sodium peroxide, potassium peroxide, calcium peroxide, or barium peroxide, and most preferably sodium peroxide or barium peroxide. The mass amount of the peroxide may be two times or more of the mass of the noble metal sponge, preferably five times or more.

In step i) of the method of the present invention, the support and/or support precursor used may be Si, Ti, Al, Sn, Ta, Mg, or a rare earth metal, and/or an oxide thereof, preferably Ti, Si, or Al, and/or an oxide thereof.

The melting in step i) may be performed at a temperature between 300°C to 1000°C, preferably between 500°C to 700°C. The melting time may be from 1 h to 12 h, preferably from 2 h to 7 h. The melting may be performed in air or oxygen atmosphere, preferably in air.

Step i) may be performed in a heat-resistant container.

The water used in step ii) may be ultrapure water or deionized water, preferably deionized water. The water may be hot water, for example having a temperature below 100°C, preferably between 20°C to 40°C.

In step iii) of the method of the present invention, the pH is adjusted to 4 to 10, preferably 6 to 8. The pH adjustment may be performed using an acid, preferably using a chlorine-free acid so as to avoid contamination of the supported noble metal catalyst. Preferably, the acid used may be an inorganic acid or organic acid, for example, HNO₃, HNO₂, H₂SO₄ or CH₃COOH. Step iii) is performed under heating, preferably at a temperature between 60°C to 110°C, and more preferably between 90°C to 110°C.

After step iii), a precipitate of the obtained supported noble metal catalyst may be filtered, washed, and/or dried, thereby obtaining the final supported noble metal catalyst. The drying may be performed under vacuum until a constant weight is reached.

In an alternative solution, after step iii), a precipitate of the obtained supported noble metal catalyst may be filtered, and then calcined to improve crystallinity. The calcination may be performed at a temperature between 200°C to 800°C, preferably between 300°C to 600°C. The calcination may be performed for 2 h to 12 h, preferably from 2 h to 6 h. The calcination may be performed in air, oxygen or an inert gas atmosphere such as nitrogen, preferably in air. After the calcination, the calcination product may be washed with water (for example, ultrapure water or deionized water, preferably deionized water) until the conductivity of the water is less than 100 µs·cm⁻¹, preferably less than 10 µs·cm⁻¹. Then, the washed product is dried. The drying may be performed under vacuum until a constant weight is reached.

Hence, in a preferred embodiment, the method of the present invention may comprise the following steps:
i) melting a noble metal sponge, a peroxide, and a support and/or a support precursor together;
ii) dispersing the molten mixture in water;
iii) adjusting the pH to 4 to 10, thereby obtaining a supported noble metal catalyst;
iv) filtering and calcining;
v) washing the calcination product with water until the conductivity of the water is less than 100 µs·cm⁻¹; and
vi) drying the washed product.

The method of the present invention uses a noble metal sponge rather than an intermediate noble metal precursor, such as a noble metal nitrate salt, a noble metal halide salt, a halogenated noble metal acid, or a salt of the halogenated noble metal acid, for example H₃IrCl₆, H₂IrCl₆, or IrCl₃. The method does not produce any intermediate product, and does not use any chlorine-containing material, thereby avoiding contamination of the final catalyst by chlorine. The method is time-saving and is simple to operate.

The catalyst produced by the method of the present invention has high activity, and the RDE OER overpotential is less than 230 mV (at 10 mA cm⁻²). Furthermore, the catalyst produced has a high surface area, for example higher than 100 m²/g, preferably from 105 m²/g to 500 m²/g, as measured by means of nitrogen adsorption according to a BET method.

In another aspect, the present invention relates to a supported noble metal catalyst obtained by the method of the present invention. The catalyst has an RDE OER overpotential below 230 mV at 10 mA cm⁻².

The catalyst of the present invention may be used in an electrolysis device or a fuel cell. The electrolysis device is preferably a water electrolysis device. The fuel cell is preferably a hydrogen fuel cell.

Hence, in yet another aspect, the present invention relates to the use of the supported noble metal catalyst obtained by the method of the present invention or the supported noble metal catalyst of the present invention in an electrolysis device or a fuel cell.

In particular, the present invention relates to the following embodiments:
1. A supported noble metal catalyst, comprising a support and a noble metal supported on the support, wherein the content of the noble metal is 10 wt% to 65 wt%, preferably 35 wt% to 65 wt%, based on the total weight of the supported noble metal catalyst, and the catalyst has an RDE OER overpotential below 230 mV at 10 mA cm⁻².
2. The supported noble metal catalyst according to embodiment 1, wherein the noble metal is a platinum group metal, preferably Ru, Rh, Pd, Pt, Os, or Ir, more preferably Ru, Pt, or Ir, and most preferably Ir.
3. The supported noble metal catalyst according to embodiment 1 or 2, wherein in the supported noble metal catalyst, the noble metal is in the form of a metal and/or an oxide thereof, preferably in a mixed form of a metal and an oxide thereof.
4. The supported noble metal catalyst according to any one of embodiments 1-3, wherein the supported noble metal catalyst has a surface area of greater than 100 m²/g, preferably from 105 m²/g to 500 m²/g, as measured by means of nitrogen adsorption according to a BET method.
5. The supported noble metal catalyst according to any one of embodiments 1-4, wherein the support is an oxide of Si, Ti, Al, Sn, Ta, Mg, or a rare earth metal, and/or a mixture of the oxides, preferably an oxide of Ti, Si, or Al, and/or a mixture of the oxides.
6. A method for preparing the supported noble metal catalyst according to any one of embodiments 1-5, comprising the following steps:
   i) melting a noble metal sponge, a peroxide, and a support and/or a support precursor together;
   ii) dispersing the molten mixture in water; and
   iii) adjusting the pH to 4 to 10, thereby obtaining a supported noble metal catalyst.
7. A method for preparing a supported noble metal catalyst, comprising the following steps:
   i) melting a noble metal sponge, a peroxide, and a support and/or a support precursor together;
   ii) dispersing the molten mixture in water; and
   iii) adjusting the pH to 4 to 10, thereby obtaining a supported noble metal catalyst.
8. The method according to embodiment 7, wherein the noble metal is a platinum group metal, preferably Ru, Rh, Pd, Pt, Os, or Ir, more preferably Ru, Pt, or Ir, and most preferably Ir.
9. The method according to embodiment 7 or 8, wherein in the supported noble metal catalyst, the noble metal is in the form of a metal and/or an oxide thereof, preferably in a mixed form of a metal and an oxide thereof.
10. The method according to any one of embodiments 7-9, wherein the content of the noble metal in the supported noble metal catalyst is from 10 wt% to 65 wt%, preferably from 35 wt% to 65 wt%, based on the total weight of the supported noble metal catalyst.
11. The method according to any one of embodiments 7-10, wherein the peroxide is an inorganic peroxide, preferably an alkali metal peroxide or an alkaline earth metal peroxide, more preferably sodium peroxide, potassium peroxide, calcium peroxide, or barium peroxide, and most preferably sodium peroxide or barium peroxide.
12. The method according to any one of embodiments 7-11, wherein the support and/or support precursor may be Si, Ti, Al, Sn, Ta, Mg, or a rare earth metal, and/or an oxide thereof, preferably Ti, Si, or Al, and/or an oxide thereof.
13. The method according to any one of embodiments 6-12, wherein the melting in step i) is performed at a temperature of 300°C to 1000°C, preferably from 500°C to 700°C and/or the melting time is from 1 h to 12 h, preferably from 2 h to 7 h.
14. The method according to any one of embodiments 6-13, wherein the water used in step ii) is ultrapure water or deionized water, preferably deionized water, the water having a temperature of below 100°C, preferably between 20°C to 40°C.
15. The method according to any one of embodiments 6-14, wherein in step iii), the pH is adjusted to 6 to 8.
16. The method according to embodiment 15, wherein the pH adjustment is performed using an acid, preferably using a chlorine-free acid, and more preferably an inorganic acid or organic acid, e.g., HNO₃, HNO₂, H₂SO₄, or CH₃COOH.
17. The method according to any one of embodiments 6-16, wherein step iii) is performed under heating, preferably at a temperature between 60°C to 110°C, and more preferably between 90°C to 110°C.
18. The method according to any one of embodiments 6-17, wherein after step iii), a precipitate of the obtained supported noble metal catalyst is filtered, washed, and dried.
19. The method according to any one of embodiments 6-17, further comprising the following steps performed after step iii):
   iv) filtering and calcining;
   v) washing the calcination product with water until the conductivity of the water is less than 100 µs·cm⁻¹; and
   vi) drying the washed product.
20. A supported noble metal catalyst obtained by the method according to any one of embodiments 6-19.
21. The supported noble metal catalyst according to embodiment 20, the supported noble metal catalyst having an RDE OER overpotential below 230 mV at 10 mA cm⁻².
22. A use of the supported noble metal catalyst according to any one of embodiments 1-5 and 20-21 in an electrolysis device or a fuel cell.

### BRIEF DESCRIPTION OF THE DRAWINGS

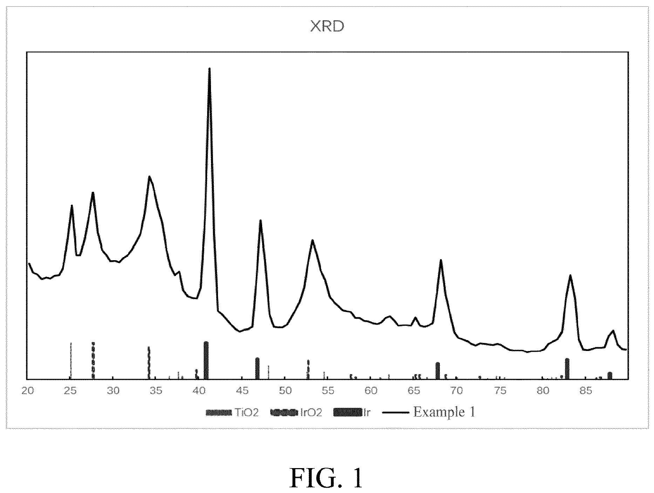

FIG. 1 shows an XRD spectrum of the supported IrOx catalyst obtained in Example 1. In addition, FIG. 1 also shows XRD spectrums of Ir, IrO₂, and TiO₂.

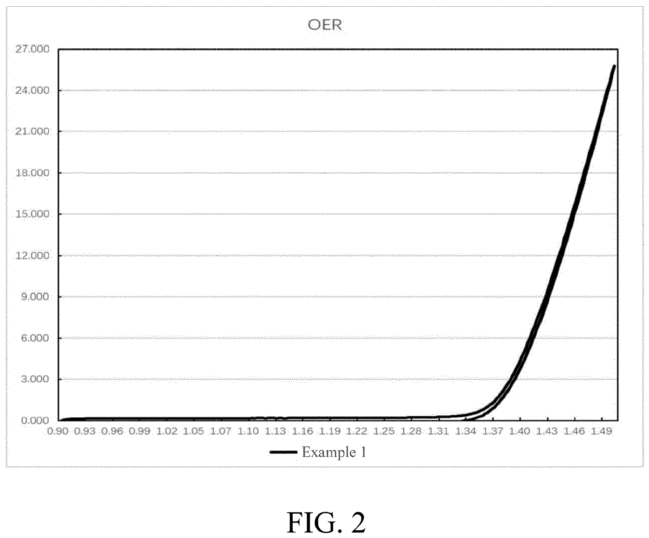

FIG. 2 is a graph of an RDE test of the supported IrOx catalyst obtained in Example 1.

### DETAILED DESCRIPTION OF THE PREFERRED EMBODIMENTS

The present invention will be described below with reference to examples, but the scope of the present invention is not limited thereto.

### Measurement Methods

XRD was measured using a Empyrean X-ray diffractometer obtained from Malvern Panalytical (Netherlands) to perform sample testing in a 20 range of 5° to 90° at a rate of 2°/min.

The overpotential of the oxygen evolution reaction in a rotating disk electrode measurement setup (RDE OER) was measured according to the following method: using a 0.1 mol/L perchloric acid solution as an electrolyte; in a three-electrode system of a PINE rotating disk electrode and an electrochemical workstation, using a saturated Ag/AgCl electrode as a reference electrode; and introducing nitrogen first to perform cyclic voltammetry (CV) activation, then introducing oxygen until saturation, and performing an OER test.

The BET specific surface area was measured using a Belsorp-mini X physical adsorption tester obtained from MicrotracBEL (Japan), wherein the specific surface area of the sample was measured using a static volume method.

### Examples

### Example 1

1 g SiO₂ powder, 2 g TiO₂ powder, 3 g iridium sponge and 30 g sodium peroxide powder were mixed homogeneously. The mixture was loaded in a crucible and heat-treated in a muffle furnace at 600°C for 3 h and was cooled to room temperature and removed. Then, deionized water was added and the pH was adjusted to 7 by the addition of nitric acid. The solution was then heated to 95°C until a precipitate was formed. The solids were filtered, placed in the crucible again and heat-treated in the muffle furnace at 400°C for 3 h, and cooled to room temperature and removed. Finally, the resulting solid powder was washed with deionized water until the conductivity of the water was 8 µs·cm⁻¹, and drying was performed to obtain the finished product.

### Example 2

1 g SiO₂ powder, 1 g TiO₂ powder, 3 g iridium sponge, and 30 g sodium peroxide powder were mixed homogeneously. The mixture was loaded in a crucible and heat-treated in a muffle furnace at 600°C for 3 h, and was cooled to room temperature and removed. Then, deionized water was added and the pH was adjusted to 7 by the addition of nitric acid. The solution was then heated to 95°C until a precipitate was formed. The solids were filtered, then placed in the crucible again and heat-treated in the muffle furnace at 300°C for 4 h, and cooled to room temperature and removed. Finally, the resulting solid powder was washed with deionized water until the conductivity of the water was 6 µs·cm⁻¹, and drying was performed to obtain the finished product.

### Example 3

1.5 g SiO₂ powder, 0.5 g Al₂O₃ powder, 4 g iridium sponge, and 30 g sodium peroxide powder were mixed homogeneously. The mixture was loaded in a crucible and heat-treated in a muffle furnace at 600°C for 3 h, and was cooled to room temperature and removed. Then, deionized water was added and the pH was adjusted to 6.5 by the addition of nitric acid. The solution was then heated to 95°C until a precipitate was formed. The solids were filtered, then placed in the crucible again and heat-treated in the muffle furnace at 300°C for 3 h, and cooled to room temperature and removed. Finally, the resulting solid powder was washed with deionized water until the conductivity of the water was 5 µs·cm⁻¹, and drying was performed to obtain the finished product.

The performance of the supported IrOx catalysts obtained is shown in Table 1.

**Table 1**

| | Iridium content | BET (N₂, m²/g) | OER overpotential (mV) |
|---|---|---|---|
| Example 1 | 42% | 175 | 205 |
| Example 2 | 48% | 233 | 205 |
| Example 3 | 57% | 111 | 215 |

## Claims

1. A supported noble metal catalyst, comprising a support and a noble metal supported on the support, wherein the content of the noble metal is from 10 wt% to 65 wt%, preferably from 35 wt% to 65 wt%, based on the total weight of the supported noble metal catalyst, and the catalyst has an RDE OER overpotential below 230 mV at 10 mA cm⁻².

2. The supported noble metal catalyst according to claim 1, wherein the noble metal is a platinum group metal, preferably Ru, Rh, Pd, Pt, Os, or Ir, more preferably Ru, Pt, or Ir, and most preferably Ir.

3. The supported noble metal catalyst according to claim 1 or 2, wherein in the supported noble metal catalyst, the noble metal is in the form of a metal and/or an oxide thereof, preferably in a mixed form of a metal and an oxide thereof.

4. The supported noble metal catalyst according to any one of claims 1-3, wherein the supported noble metal catalyst has a surface area higher than 100 m²/g, preferably from 105 m²/g to 500 m²/g, as measured by means of nitrogen adsorption according to a BET method.

5. The supported noble metal catalyst according to any one of claims 1-4, wherein the support is an oxide of Si, Ti, Al, Sn, Ta, Mg, or a rare earth metal, and/or a mixture of the oxides, preferably an oxide of Ti, Si, or Al, and/or a mixture of the oxides.

6. A method for preparing the supported noble metal catalyst according to any one of claims 1-5, comprising the following steps:
i) melting a noble metal sponge, a peroxide, and a support and/or a support precursor together;
ii) dispersing the molten mixture in water; and
iii) adjusting the pH to 4 to 10, thereby obtaining a supported noble metal catalyst.

7. A method for preparing a supported noble metal catalyst, comprising the following steps:
i) melting a noble metal sponge, a peroxide, and a support and/or a support precursor together;
ii) dispersing the molten mixture in water; and
iii) adjusting the pH to 4 to 10, thereby obtaining a supported noble metal catalyst.

8. The method according to claim 6 or 7, wherein the melting in step i) is performed at a temperature between 300°C to 1000°C, preferably between 500°C to 700°C and/or the melting time is from 1 h to 12 h, preferably from 2 h to 7 h.

9. The method according to any one of claims 6-8, wherein the water used in step ii) is ultrapure water or deionized water, preferably deionized water, the water having a temperature of below 100°C, preferably between 20°C to 40°C.

10. The method according to any one of claims 6-9, wherein in step iii), the pH is adjusted to 6 to 8.

11. The method according to claim 10, wherein the pH adjustment is performed using an acid, preferably using a chlorine-free acid, and more preferably an inorganic acid or organic acid, e.g., HNO₃, HNO₂, H₂SO₄, or CH₃COOH.

12. The method according to any one of claims 6-11, wherein step iii) is performed under heating, preferably at a temperature between 60°C to 110°C, and more preferably between 90°C to 110°C.

13. The method according to any one of claims 6-12, wherein after step iii), a precipitate of the obtained supported noble metal catalyst is filtered, washed, and dried.

14. The method according to any one of claims 6-12, further comprising the following steps performed after step iii):
iv) filtering and calcining;
v) washing the calcination product with water until the conductivity of the water is less than 100 µs·cm⁻¹; and
vi) drying the washed product.

15. Use of the supported noble metal catalyst according to any one of claims 1-5 or the supported noble metal catalyst obtained by the method according to any one of claims 6-14 in an electrolysis device or a fuel cell.
